# EUROPÄISCHE PATENTSCHRIFT

(11) **EP 0 743 232 B1**
(45) Veröffentlichungstag und Bekanntmachung des Hinweises auf die Patenterteilung: **30.06.1999**
(21) Anmeldenummer: 96106515.8
(22) Anmeldetag: 25.04.1996
(51) Int. Cl.: B60S 1/52, B60S 1/60

(54) **Befestigungseinrichtung für einen Düsenträger einer Waschanlage zur Reinigung einer Lichtscheibe eines Scheinwerfers für Fahrzeuge**
Mounting device for the jet holder of a vehicle headlamp washer
Dispositif de fixation d'un support de buses pour un lave-phares de véhicule

(30) Priorität: 15.05.1995 DE 19517761
(43) Veröffentlichungstag der Anmeldung: 20.11.1996
(73) Patentinhaber: Hella KG Hueck & Co., 59552 Lippstadt (DE); DaimlerChrysler AG, 70567 Stuttgart (DE)
(72) Erfinder: Gerstner, Harald, 71134 Aidlingen (DE); Jocher, Reiner, 71134 Aidlingen (DE); Kemper, Wolfgang, 59602 Rüthen (DE); Orth, Peter, 58557 Lippstadt (DE); Thiele, Klaus, 59558 Lippstadt (DE); Witt, Ulrich, 59557 Lippstadt (DE)

(56) Entgegenhaltungen:
- DE-A- 4 426 878
- DE-U- 9 309 852
- FR-A- 2 651 188
- FR-A- 2 681 031
- FR-A- 2 721 276

## Beschreibung

Die Erfindung betrifft eine Befestigungseinrichtung für einen Düsenträger einer Waschanlage zur Reinigung einer Lichtscheibe eines Scheinwerfers für Fahrzeuge, wobei der Düsenträger an dem in eine Karosserieöffnung einsetzbaren Scheinwerfer gehaltert ist und mit einem eine Düse tragenden Verstellelement versehen ist, welches aus einer Fahrzeugöffnung teleskopartig herausfahrbar ist, um die Düse von einer Ruhestellung in eine Gebrauchsstellung zu bringen.

Eine solche Befestigungseinrichtung für einen Düsenträger einer Waschanlage zur Reinigung einer Lichtscheibe eines Scheinwerfers für Fahrzeuge ist aus der DE 35 18 685 C1 bekannt. Der Düsenträger ist unterhalb des Scheinwerfers angeordnet und mit dem Scheinwerfer starr verbunden. Somit ist der Düsenträger zusammen mit dem Scheinwerfer in eine Karosserieöffnung einsetzbar und in der Karosserieöffnung ausrichtbar. Die von einem teleskopartig verstellbaren stangenartigen Verstellelement getragene Düse ist von einer Kappe abgedeckt, welche unmittelbar an eine Lichtscheibe des Scheinwerfers angrenzt und zur Vorderseite der Lichtscheibe bündig verläuft. Die Düse ist durch den Druck von Waschflüssigkeit der Waschanlage von einer Ruhestellung in eine Gebrauchsstellung verschiebbar. In der Gebrauchsstellung öffnet ein Ventil und aus der Düse treten Wassertröpfchen aus, welche in einem Sprühkegel auf die Lichtscheibe auftreffen und Schmutz von der Lichtscheibe lösen. Nach dem Sprühvorgang drückt eine in den Düsenträger eingesetzte Feder das die Düse tragende Verstellelement in die Ruhelage. Ein starr mit der Unterseite des Scheinwerfers verbundener Düsenträger ist aus dem deutschen Gebrauchsmuster G 93 09 852.9, das alle Merkmale des Oberbegriffs offenbart, bekannt. Der Düsenträger ist an beiden Endabschnitten mit einem Befestigungselement des Scheinwerfers verbunden. Zwischen einem Befestigungselement des Scheinwerfers und dem Düsenträger besteht eine spielfreie Nut-Feder-Verbindung und zwischen dem anderen Befestigungselement und dem Düsenträger eine Schraubenverbindung. Wegen der starren Verbindung zwischen Scheinwerfer und Düsenträger ist ein Ausrichten der Düse zu einer Fahrzeugöffnung nicht möglich. Ein Ausrichten der Düse in ihrer Verstellrichtung ist bei dem in dem deutschen Gebrauchsmuster G 93 06 316.4 dargestellten und beschriebenen Düsenträger möglich. Die Düse ist von einem Anschlußteil getragen, welches durch eine Fahrzeugöffnung hindurch in das teleskopartig verschiebbare Verstellelement des Düsenträgers hineinschiebbar ist, bis eine die Düse abdeckende Kappe an den äußeren Rand der Fahrzeugöffnung anstößt. Da die Düse nicht radial zu ihrer Verstellrichtung zur Fahrzeugöffnung ausrichtbar ist, ragt sie zusammen mit der Kappe aus der Fahrzeugöffnung heraus. Wäre die Düse zusammen mit der Kappe versenkt in der Fahrzeugöffnung angeordnet, so wäre ein gleich großer umlaufender Spalt zwischen der Kappe und dem Rand der Fahrzeugöffnung nicht sicher, bzw. bei einer großflächigen Kappe wäre die Anlage ihres äußeren umlaufenden Randes an dem Rand der Fahrzeugöffnung nicht sicher. Außerdem ist der Düsenträger mit einem inneren Karosserieteil starr verbunden und kann somit nicht zusammen mit dem Scheinwerfer in eine Karosserieöffnung eingesetzt werden.

Aufgabe der Erfindung ist es, die im Oberbegriff des Anspruches 1 beschriebene Befestigungseinrichtung für einen Düsenträger einer Waschanlage zur Reinigung einer Lichtscheibe eines Scheinwerfers für Fahrzeuge derart zu gestalten, daß die Düse nach einem Einsetzen des Scheinwerfers in eine Karosserieöffnung und nach einem Haltern des Düsenträgers an dem Scheinwerfer zu einer sie aufnehmenden Fahrzeugöffnung in alle Richtungen justierbar sein soll und die Justierung der Düse auch dann erfolgen kann, wenn die den Düsenträger am Scheinwerfer halternden Befestigungselemente nicht mehr zugänglich sind.

Diese Aufgabe wird nach der Erfindung dadurch gelöst, daß der Düsenträger an dem in Einsetzrichtung des Scheinwerfers weisenden Endabschnitt mit einem Befestigungselement des Scheinwerfers gelenkartig verbunden ist und mit dem anderen Endabschnitt mittels eines durch die Fahrzeugöffnung von außen erreichbaren Befestigungselements an dem Fahrzeug arretierbar ist und daß zumindest die Düse in der Ruhestellung in Richtung der Längsachse des Düsenträgers gegenüber der Fahrzeugöffnung bewegbar ist. Nach einem Einsetzen des Scheinwerfers zusammen mit dem Düsenträger in die Fahrzeugöffnung kann der Scheinwerfer zu einem angrenzenden Fahrzeugteil ausgerichtet und in der ausgerichteten Lage an der Karosserie festgesetzt werden. Anschließend kann ein die Fahrzeugöffnung für die Düse aufweisendes Fahrzeugteil, zum Beispiel ein Stoßfänger oder ein Spoiler montiert werden. Die Düse kann durch die Fahrzeugöffnung hindurch in alle Richtungen zur Fahrzeugöffnung ausgerichtet werden und in der ausgerichteten Lage durch das Befestigungselement des Düsenträgers in dem Fahrzeugteil befestigt werden. Nach dem Befestigen des Düsenträgers an dem Fahrzeugteil ist seine Lage festgelegt. Als letzter Arbeitsgang kann eine Kappe auf die Düse aufgesetzt werden. Die Kappe kann versenkt in der Fahrzeugöffnung angeordnet sein und zusammen mit dem angrenzenden Rand der Fahrzeugöffnung umlaufend einen gleich großen Spalt bilden oder an dem äußeren Randbereich der Fahrzeugöffnung umlaufend anliegen.

Um den Düsenträger beim Einsetzen des Scheinwerfers in eine Karosserieöffnung in einer vorfixierten Lage sicher zu halten, ist es vorteilhaft, wenn der Düsenträger zwischen dem Befestigungselement des Scheinwerfers, mit welchem der Düsenträger gelenkig verbunden ist, und dem Befestigungselement des Düsenträgers, mit welchem der Düsenträger an dem Fahrzeug befestigbar ist, durch eine Nut-Feder-Verbindung an dem Scheinwerfer halterbar ist, welche quer zur Verstellrichtung der Düse ein großes Spiel aufweist. Dadurch ist der Düsenträger beim Einsetzen des Scheinwerfers in eine Karosserieöffnung sowohl an dem Befestigungselement des Scheinwerfers als auch über die Nut-Feder-Verbindung an dem Scheinwerfer gehaltert. Je größer das Spiel der Nut-Feder-Verbindung, um so größer ist der Winkel, um welchen der Düsenträger bei seinem Ausrichten zu der Fahrzeugöffnung um die gelenkige Verbindung schwenkbar ist. Die Nut-Feder-Verbindung ist in ihrem Aufbau sehr einfach und kostengünstig herstellbar, wenn die Feder hakenförmig und die Nut ösenförmig ausgeführt ist. Beim Einsetzen des Düsenträgers in die Karosserieöffnung liegt die Feder an einer Seitenfläche der Nut an.

Bei einer besonders vorteilhaften Weiterbildung der Erfindung besteht die gelenkige Verbindung zwischen dem Befestigungselement des Scheinwerfers und dem Düsenträger durch ein zylindrisches starres Verbindungsteil und einem mit dem starren Verbindungsteil im Preßsitz zusammengefügten elastischen Verbindungsteil, wobei die Fügerichtung in Verstellrichtung der Düse verläuft und die Verbindungsteile in Verstellrichtung der Düse zueinander verschiebbar sind. Dadurch ist der Düsenträger beim Ausrichten der Düse zur Fahrzeugöffnung des Fahrzeugteiles an dem Befestigungselement des Scheinwerfers sowohl in alle Richtungen schwenkbar als auch in Verstellrichtung der Düse verschiebbar. Nach dem Befestigen des Scheinwerfers und des Düsenträgers am Fahrzeugteil besteht die einzige Verbindung zwischen dem Scheinwerfer und dem Düsenträger über das elastische Verbindungsteil. Somit ist die Verbindung zwischen Düsenträger und Scheinwerfer schwingungsgedämpft und am Düsenträger auftretende mögliche Schwingungen können sich nicht auf den Scheinwerfer störend übertragen.

Die beiden Verbindungsteile bauen sehr klein, wenn das elastische Verbindungsteil eine von einem Zapfen des Düsenträgers getragene ringförmige Scheibe ist und das zylindrische starre Verbindungsteil eine an den Scheinwerfer angebrachte Hülse ist, in welche die Scheibe im Preßsitz eingeschoben ist. Hierbei ist es vorteilhaft, wenn die Langsachse des Zapfens mit der Verstellrichtung der Düse fluchtet. Die Scheibe ist leichtgängig in die Hülse einfügbar und trotzdem sicher in der Hülse gehalten, wenn die Hülse an ihrer Innenseite in Verstellrichtung der Düse verlaufende Rippen aufweist, welche in die elastische Scheibe eingedrückt sind und die elastische Scheibe umlaufend sich zu ihrem äußeren Rand hin verjüngt. Dadurch können die Längsachsen der Hülse und des Zapfens in spitzem Winkel zueinander verlaufen.

Zudem sind die beiden Verbindungsteile vorteilhaft ausgeführt, wenn das starre zylindrische Verbindungsteil von der Mantelfläche des Düsenträgers selbst gebildet ist und das elastische Verbindungsteil ringförmig ausgeführt und im Preßsitz auf die Mantelfläche des Düsenträgers aufgeschoben ist. Bei einer solchen Lösung kann der Düsenträger in Richtung seiner Längsachse um einen großen Weg verschoben werden und der Düsenträger muß wegen den beiden Verbindungsteilen in Einsetzrichtung des Scheinwerfers nicht verlängert werden. Hierbei ist es besonders vorteilhaft, wenn das ringförmige Verbindungsteil einstückig mit dem Befestigungselement hergestellt ist, wobei die zentrale Öffnung des ringförmigen Verbindungsteils von radial nach innen gerichteten und durch jeweils ein Schlitz getrennten federnden Fahnen gebildet ist. Die Fahnen liegen umlaufend an der Mantelfläche des Düsenträgers an. Der Düsenträger ist zwischen den Fahnen in Richtung seiner Längsachse leichtgängig verschiebbar, wenn die Fahnen zusammen trichterförmig ausgeführt sind. Bei einer anderen Ausführungsform ist es weiterhin vorteilhaft, wenn das ringförmige Verbindungsteil aus gummielastischem Werkstoff hergestellt und in eine Öffnung des Befestigungselementes des Scheinwerfers eingesetzt ist. Dadurch kann das Befestigungselement aus starrem Werkstoff hergestellt sein.

Der Düsenträger ist an dem Fahrzeug durch sein Befestigungselement besonders einfach und schnell an dem Fahrzeug befestigbar, wenn durch das Befestigungselement eine Steck- und/oder Schraubenverbindung zwischen dem Düsenträger und dem Fahrzeug herstellbar ist.

Zwei Ausführungsbeispiele nach der Erfindung sind in den Zeichnungen dargestellt, und zwar zeigen
- Figur 1: einen Düsenträger einer Waschanlage zur Reinigung von Lichtscheiben eines Scheinwerfers für Fahrzeuge, wobei die Düse von ihrer Ruhestellung durch eine Fahrzeugöffnung in ihre Gebrauchsstellung herausgefahren ist und von dem Scheinwerfer eine Lichtscheibe dargestellt ist;
- Figur 2: einen Schnitt nach der Linie A-A in Figur 1 durch den Düsenträger mit der Düse in Ruhe- und Gebrauchsstellung;
- Figur 3: einen Düsenträger mit einer anders gestalteten Verbindung zum Scheinwerfer hin und
- Figur 4: einen Schnitt nach der Linie B-B in Figur 3 ausschließlich durch ein mit dem Scheinwerfer verbundenes elastisches Verbindungsteil, in welches der Düsenträger eingeschoben ist.

Der Düsenträger (1) einer Waschanlage zur Reinigung einer Lichtscheibe (2) eines Scheinwerfers (3) für Fahrzeuge ist unterhalb des Scheinwerfers (3) angeordnet. Die Lichtscheibe (2) schließt ein Gehäuse auf ihrer Vorderseite ab. Der Düsenträger (1) weist ein zylindrisches Außenteil (21) und ein aus dem zylindrischen Außenteil (21) teleskopartig herausfahrbares stabartiges Verbindungselement (6) auf. Das Verbindungselement (6) trägt an seinem aus dem zylindrischen Außenteil (21) herausragenden Ende zwei nebeneinander angeordnete Düsen (5), welche jeweils zur Reinigung eines seitlichen Abschnitts der Lichtscheibe (2) dienen. Die beiden Düsen (5) sind hinter der Fahrzeugöffnung (7) des Fahrzeuges (12) angeordnet und durch eine Kappe (22) abgedeckt.

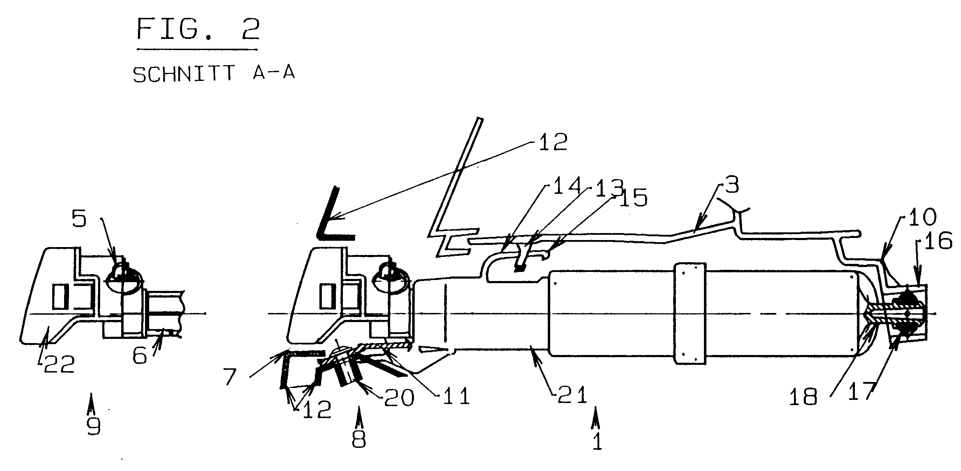

In Figur 2 ist in der Ruhestellung (8) der Düsen (5) die Kappe (22) versenkt angeordnet und verläuft mit ihrer Vorderseite bündig zur Außenseite des an sie angrenzenden Fahrzeugteils (12). Das die Fahrzeugöffnung (7) aufweisende Fahrzeugteil (12) kann eine Blende, der Spoiler oder der Stoßfänger des Fahrzeuges sein.

Das die Düsen (5) tragende stabförmige Verstellelement (6) ist im Inneren des zylindrischen Außenteils (21) mit einem Kolben (nicht dargestellt) gekoppelt. Der Kolben ist durch den Druck von Waschflüssigkeit, welche durch den rechtwinklig abstehenden Anschlußstutzen (24) in den Düsenträger (1) einströmt, gegen die Kraft einer Feder (nicht dargestellt) verschiebbar. Beim Verschieben des Kolbens fahren die Düsen (5) von ihrer Ruhestellung (8) durch die Fahrzeugöffnung (7) hindurch in ihre Gebrauchsstellung (9). Danach öffnet sich ein den Düsen (5) benachbartes Ventil (nicht dargestellt) und die Waschflüssigkeit tritt in Form von kleinen Wassertröpfchen aus den Düsen (5) heraus. Beim Auftreffen der Wassertröpfchen auf die Lichtscheibe (2) wird sie von einer eventuellen Verschmutzung gesäubert. Nach dem Reinigungsvorgang drückt die Feder den Kolben des Verstellelementes (2) und die Düsen (5) in ihre Ruhelage (8).

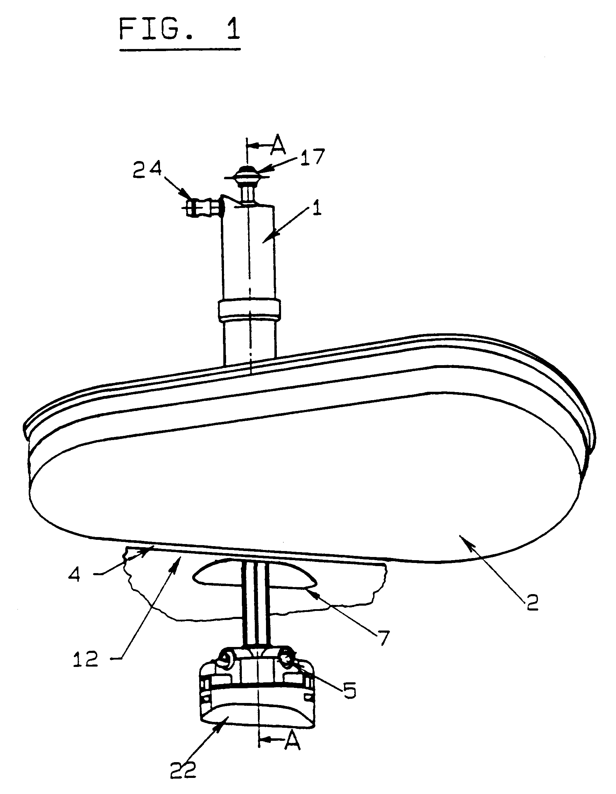

Der in den Figuren 1 und 2 dargestellte Düsenträger (1) ist mit dem in Einsetzrichtung des Scheinwerfers (3) weisenden Endabschnitt gelenkig mit einem an das Gehäuse des Scheinwerfers (3) einstückig angeformten Befestigungselement (10) verbunden und durch eine zwischen den Düsen (5) und dem Befestigungselement (10) angeordnete Nut-Feder-Verbindung (13, 14) beim Einsetzen des Scheinwerfers (3) in eine Karosserieöffnung (4) am Scheinwerfer (3) halterbar. Die gelenkige Verbindung zwischen dem Düsenträger (1) und dem Befestigungselement (10) des Scheinwerfers (3) besteht aus einem starren zylindrischen Verbindungsteil (16) und einem elastischen Verbindungsteil (17). Das zylindrische Verbindungsteil (16) ist hülsenartig ausgeführt und das elastische Verbindungsteil (17) ist aus gummielastischem Werkstoff hergestellt und scheibenartig ausgeführt. Das Verbindungsteil (17) ist auf einen Zapfen (18) des Düsenträgers (1) geschoben und in einer umlaufenden Nut des Zapfens (18) fixiert. Der Zapfen (18) fluchtet mit seiner Längsachse mit der Längsachse des zylindrischen Düsenträgers (1). Der Düsenträger (1) ist mit dem scheibenartigen elastischen Verbindungsteil (17) in das hülsenartige Verbindungsteil (16) des Scheinwerfers (3) im Preßsitz eingeschoben. Das scheibenartige Verbindungsteil (17) verjüngt sich zu ihrem umlaufenden äußeren Rand, in welchen an die Innenseite des hülsenartigen Verbindungsteils (16) angeformte Rippen (nicht dargestellt) eingedrückt sind. Die Rippen verlaufen in Fügerichtung der beiden Verbindungsteile (16 und 17). Die Nut-Feder-Verbindung (13, 14) zwischen dem Düsenträger (1) und dem Scheinwerfer (3) weist radial zur Verstellrichtung der Düse (5) ein sehr großes Spiel auf. Die Feder (14) ist an die Außenseite des Düsenträgers (1) angeformt und ist hakenförmig ausgeführt. Der freie Schenkel des Hakens weist in Einsetzrichtung des Scheinwerfers (3) und ist beim Zusammenfügen der Verbindungsteile (16, 17) in die von einer Öse gebildet Nut (13) mit Spiel eingeschoben. Am freien Ende weist die Feder (14) eine Haltenase (15) auf, welche beim Anliegen der Feder (14) an eine Innenseite der Nut (13) ein Herausziehen der Feder (14) aus der Nut (13) und ein Herausziehen des Verbindungsteils (17) aus dem Verbindungsteil (16) verhindert. Beim Einsetzen des Scheinwerfers (3) in die Karosserieöffnung (4) liegt die Feder (14) an der nach oben gerichteten Seitenfläche der ösenartigen Nut (13) an. Nach dem Einsetzen des Scheinwerfers (3) zusammen mit dem Düsenträger (1) wird das von dem Spoiler bzw. Stoßfänger gebildete Fahrzeugteil (12) montiert. Die Lage der Fahrzeugöffnung (7) des Fahrzeugteils (12) zum Scheinwerfer (3) muß aus Kostengründen sehr grob toleriert sein. Der Düsenträger (1) ist wegen seiner gelenkigen und verschiebbaren Lagerung an dem Scheinwerfer (3) durch die Fahrzeugöffnung (7) hindurch zu der Fahrzeugöffnung (7) ausrichtbar. Nach dem Ausrichten des Düsenträgers (1) bzw. der Düsen (5) zu der Fahrzeugöffnung (7) besteht zwischen dem Düsenträger (1) und dem Fahrzeugteil (12) eine nicht dargestellte Steckverbindung und eine mit einem Befestigungselement (11) des Düsenträgers (1) hergestellte Schraubenverbindung (20) zum Fahrzeugteil (12) hin. Das Befestigungselement (11) ist eine an den Düsenträger (1) angeformte und zur Fahrzeugöffnung (7) hinweisende federnde Zunge, in welche eine Öffnung für eine Schraube eingebracht ist. Beim Eindrehen der Schraube in ein Gewindebohrung des Fahrzeugteils (12) legt sich die federnde Zunge an das Fahrzeugteil (12) an und hält die zusammengesteckten Teile der Steckverbindung in ihrer Lage. Nach dem Herstellen der Schraubenverbindung (20) ist die Kappe (22) selbstrastend mit den beiden Düsen (5) verbindbar.

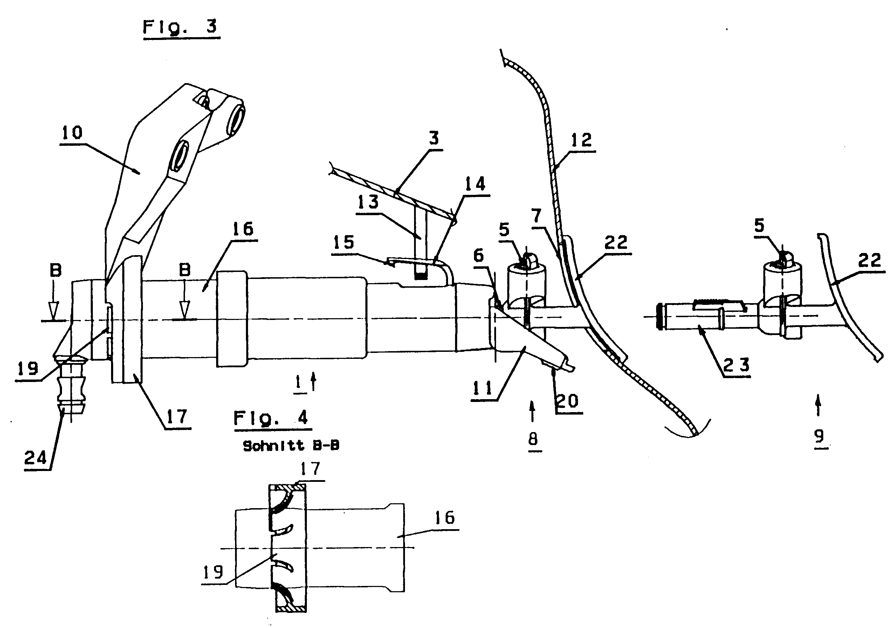

Der in den Figuren 3 und 4 dargestellte Düsenträger (1) ist durch ein an dem Gehäuse des Scheinwerfers (3) befestigtes separates Befestigungselement (10) gehaltert. Das Befestigungselement (10) ist aus Kunststoff und einstückig mit dem ringförmigen Verbindungsteil (17) hergestellt. Die zentrale Öffnung des ringförmigen Verbindungsteils (17) ist durch das freie Ende von radial nach innen gerichteten und jeweils durch einen Schlitz voneinander getrennten federnden Fahnen (19) gebildet. Die federnden Fahnen (19) bilden zusammen einen Trichter, welcher sich in Einsetzrichtung des Scheinwerfers verjüngt. In den ringförmigen Trichter ist der zylindrische Düsenträger (1) mit seinen den Düsen (5) abgewandten Endabschnitt eingeschoben. Nach dem Einschieben liegen die Fahnen (19) federnd an der Mantelfläche des zylindrischen Düsenträgers (1) an. Somit bildet der Düsenträger (1) mit seiner Mantelfläche selbst das starre Verbindungsteil (16). Das Befestigungselement (11) des Düsenträgers (1) ist ausschließlich durch eine Schraubenverbindung (20) mit dem Fahrzeugteil (12), welches die Fahrzeugöffnung (7) aufweist, verbindbar.

Die Düsen (5) sind mit einem Anschlußstutzen (23) versehen, welcher in das stabförmige Verstellelement (6) ratschenartig einschiebar ist und somit in jeder beliebigen Stellung an dem Verstellelement (6) festsetzbar ist. Wegen der ratschenartigen Verbindung kann die Düse (5) auch nach dem Befestigen des Düsenträgers (1) an dem Fahrzeugteil (12) durch die Fahrzeugöffnung (7) hindurch montiert werden. Dadurch ist auch bei einer groben Ausrichtung des Düsenträgers (1) zur Fahrzeugöffnung (7) sicher, daß die Kappe (22) mit ihrem äußeren Rand umlaufend an dem Rand der Fahrzeugöffnung (7) anlegbar ist. Außerdem ist das Befestigungselement (11) bei nicht montierten Düsen (5) sehr gut durch die Fahrzeugöffnung (7) hindurch erreichbar.

### Bezugszeichenliste

- 1: Düsenträger
- 2: Lichtscheibe
- 3: Scheinwerfer
- 4: Karosserieöffnung
- 5: Düse
- 6: Verstellelement
- 7: Fahrzeugöffnung
- 8: Ruhestellung
- 9: Gebrauchsstellung
- 10: Befestigungselement
- 11: Befestigungselement
- 12: Fahrzeug
- 13: Nut
- 14: Feder
- 15: Haltenase
- 16: Verbindungsteil
- 17: Verbindungsteil
- 18: Zapfen
- 19: Fahnen
- 20: Schraubenverbindung
- 21: Außenteil
- 22: Kappe
- 23: Anschlußstutzen
- 24: Anschlußstutzen

## Patentansprüche

1. Befestigungseinrichtung für einen Düsenträger (1) einer Waschanlage zur Reinigung einer Lichtscheibe (2) eines Scheinwerfers (3) für Fahrzeuge, wobei der Düsenträger (1) an dem in eine Karosserieöffnung (4) einsetzbaren Scheinwerfer (3) gehaltert ist und mit einem eine Düse (5) tragenden Verstellelement (6) versehen ist, welches aus einer Fahrzeugöffnung (7) teleskopartig herausfahrbar ist, um die Düse (5) von einer Ruhestellung (8) in eine Gebrauchsstellung (9) zu bringen, dadurch gekennzeichnet, daß der Düsenträger (1) an dem in Einsetzrichtung des Scheinwerfers (3) weisenden Endabschnitt mit einem Befestigungselement (10) des Scheinwerfers (3) gelenkartig verbunden ist und mit dem anderen Endabschnitt mittels eines durch die Fahrzeugöffnung (7) von außen erreichbaren Befestigungselementes (11) des Düsenträgers (1) an dem Fahrzeug (12) arretierbar ist und daß zumindest die Düse (5) in Ruhestellung (8) in Richtung der Längsachse des Düsenträgers (1) gegenüber der Fahrzeugöffnung (7) bewegbar ist.

2. Befestigungseinrichtung nach Anspruch 1, dadurch gekennzeichnet, daß der Düsenträger (1) zwischen dem Befestigungselement (10) des Scheinwerfers (3), mit welchem der Düsenträger (1) gelenkartig verbunden ist und dem Befestigungselement (11) des Düsenträgers (1), mit welchem der Düsenträger (1) an dem Fahrzeug (12) befestigbar ist, durch eine Nut-Feder-Verbindung (13, 14) an dem Scheinwerfer (3) halterbar ist, welche quer zur Verstellrichtung der Düse (5) ein großes Spiel aufweist.

3. Befestigungseinrichtung nach Anspruch 2, dadurch gekennzeichnet, daß die Feder (14) hakenförmig und die Nut (13) ösenförmig ausgeführt ist.

4. Befestigungseinrichtung nach einem der Ansprüche 1 bis 3, dadurch gekennzeichnet, daß die gelenkige Verbindung zwischen dem Befestigungselement (10) des Scheinwerfers (3) und dem Düsenträger (1) durch ein zylindrisches starres Verbindungsteil (16) und einem mit dem Verbindungsteil (16) im Preßsitz zusammengefügten elastischen Verbindungsteil (17) gebildet ist, wobei die Fügerichtung in Verstellrichtung der Düse (5) verläuft und die Verbindungsteile (16, 17) in Verstellrichtung der Düse (5) zueinander verschiebbar sind.

5. Befestigungseinrichtung nach Anspruch 4, dadurch gekennzeichnet, daß das elastische Verbindungsteil (16) eine von einem Zapfen (18) eines Düsenträgers (1) getragene ringförmige Scheibe ist und das zylindrische starre Verbindungsteil (17) eine an den Scheinwerfer (3) angebrachte Hülse ist, in welche die Scheibe im Preßsitz eingeschoben ist.

6. Befestigungseinrichtung nach Anspruch 5, dadurch gekennzeichnet, daß die Hülse an ihrer Innenseite in Verstellrichtung der Düse (5) verlaufende Rippen aufweist, welche in die elastische Scheibe eingedrückt sind.

7. Befestigungseinrichtung nach einem der Ansprüche 4 bis 6, dadurch gekennzeichnet, daß das starre zylindrische Verbindungsteil (16) von der Mantelfläche des Düsenträgers (1) selbst gebildet ist und das elastische Verbindungsteil (17) ringförmig ausgeführt und im Preßsitz auf die Mantelfläche des Düsenträgers (1) aufgeschoben ist.

8. Befestigungseinrichtung nach Anspruch 7, dadurch gekennzeichnet, daß das ringförmige Verbindungsteil aus gummielastischen Werkstoff hergestellt und in eine Öffnung des Befestigungselementes des Scheinwerfers eingesetzt ist.

9. Befestigungseinrichtung nach Anspruch 7, dadurch gekennzeichnet, daß das ringförmige Verbindungsteil (17) einstückig mit dem Befestigungselement (10) hergestellt ist, wobei die zentrale Öffnung des ringförmigen Verbindungsteils (17) von radial nach innen gerichteten und durch jeweils einen Schlitz getrennten federnden Fahnen (19) gebildet ist.

10. Befestigungseinrichtung nach Anspruch 9, dadurch gekennzeichnet, daß das ringförmige Verbindungsteil (17) durch die Fahnen (19) trichterförmig ausgeführt ist.

11. Befestigungseinrichtung nach einem der Ansprüche 1 bis 10, dadurch gekennzeichnet, daß durch das Befestigungselement (11) des Düsenträgers (1) eine Steck- und/oder Schraubenverbindung (20) zum Fahrzeug (12) hin herstellbar ist.

12. Befestigungseinrichtung nach Anspruch 11, dadurch gekennzeichnet, daß das Befestigungselement (11) des Düsenträgers (1) eine federnde Zunge aufweist, welche durch die Schraubenverbindung (20) an dem Fahrzeug festsetzbar ist und die Steckverbindung in ihrer Lage hält.

## Claims

1. A fixing device for a nozzle holder (1) of a washer installation for cleaning a lens cover (2) of a headlamp (3) for vehicles, wherein the nozzle holder (1) is mounted on the headlamp (3), which can be inserted in a bodywork aperture (4), and is provided with an adjusting element (6) which bears a nozzle (5) and which can be advanced telescopically from a vehicle aperture (7) in order to bring the nozzle (5) from an inoperative position (8) into a position of use (9), characterised in that the nozzle holder (1) is joined in an articulated manner, at its end section which points in the direction of insertion of the headlamp (3), to a fixing element (10) of the headlamp (3) and can be locked to the vehicle (12) at its other end section by means of a fixing element (11) of the nozzle holder (1) which can be reached from the outside through the vehicle aperture (7), and in the inoperative position (8) the nozzle (5) at least can be moved in relation to the vehicle aperture (7) in the direction of the longitudinal axis of the nozzle holder (1).

2. A fixing device according to claim 1, characterised in that the nozzle holder (1) can be mounted on the headlamp (3), between the fixing element (10) of the headlamp (3) to which the nozzle holder (1) is joined in the manner of an articulated joint and the fixing element (11) of the nozzle holder (1) by which the nozzle holder (1) can be fixed to the vehicle (12), by a tongue and groove joint (13, 14) which has a large extent of play transverse to the direction of adjustment of the nozzle (5).

3. A fixing device according to claim 2, characterised in that the tongue (14) is constructed in the form of a hook and the groove (13) is constructed in the form of a loop.

4. A fixing device according to any one of claims 1 to 3, characterised in that the articulated joint between the fixing element (10) of the headlamp (3) and the nozzle holder (1) is formed by a rigid cylindrical joint part (16) and by a flexible joint part (17) which is assembled as a press fit with the joint part (16), wherein the direction of the joint runs in the direction of adjustment of the nozzle (5) and the joint parts (16, 17) can be displaced in relation to each other in the direction of adjustment of the nozzle (5).

5. A fixing device according to claim 4, characterised in that the flexible joint part (16) is an annular disc borne by a spigot (18) of a nozzle holder (1) and the rigid cylindrical joint part (17) is a bushing which is mounted on the headlamp (3) and into which the disc is inserted with a press fit.

6. A fixing device according to claim 5, characterised in that the bushing has ribs on its inner face which run in the direction of adjustment of the nozzle (5) and which are pressed into the flexible disc.

7. A fixing device according to any one of claims 4 to 6, characterised in that the rigid cylindrical joint part (16) is formed from the curved surface of the nozzle holder (1) itself and the flexible joint part (17) is of annular construction and is pushed on to the curved surface of the nozzle holder (1) with a press fit.

8. A fixing device according to claim 7, characterised in that the annular joint part is manufactured from a flexible, rubber-like material and is inserted in an opening of the fixing element of the headlamp.

9. A fixing device according to claim 7, characterised in that the annular joint part (17) is manufactured in one piece with the fixing element (10), wherein the central opening of the annular joint part (17) is formed by radially inwardly oriented resilient vanes (19) which are each separated by a slit.

10. A fixing device according to claim 9, characterised in that the annular joint part (17) is formed in a shape of a funnel by the vanes (19).

11. A fixing device according to any one of claims 1 to 10, characterised in that a pushin and/or screwed joint (20) to the vehicle (12) can be made through the fixing element (11) of the nozzle holder (1).

12. A fixing device according to claim 11, characterised in that the fixing element (11) of the nozzle holder (1) comprises a resilient tongue which can be fixed to the vehicle by the screwed joint (20) and which holds the plug-in joint in its position.

## Revendications

1. Dispositif de fixation pour un porte-buse (1) d'un lave-glace pour nettoyer la plaque d'éclairement (2) d'un phare (3) pour véhicules, le porte-buse (1) étant maintenu sur le phare (3) susceptible d'être mis en place dans une ouverture de carrosserie (4) et pourvu d'un élément de translation (6) portant une buse (5), lequel est susceptible d'être sorti de manière télescopique hors d'une ouverture de véhicule (7) pour amener la buse (5) depuis une position de repos (8) jusque dans une position d'utilisation (9), caractérisé en ce que le porte-buse (1) est relié de manière articulée, sur le tronçon d'extrémité orienté en direction de mise en place du phare (3), avec un élément de fixation (10) du phare (3) et en ce qu'avec l'autre tronçon d'extrémité, il est susceptible d'être bloqué sur le véhicule (12) au moyen d'un élément de fixation (11) du porte-buse (1), ledit élément de fixation étant accessible depuis l'extérieur à travers l'ouverture de véhicule (7), et en ce qu'au moins la buse (5) en position de repos (8) est déplaçable en direction de l'axe longitudinal du porte-buse (1) par rapport à l'ouverture de véhicule (7).

2. Dispositif de fixation selon la revendication 1, caractérisé en ce qu'entre l'élément de fixation (10) du phare (3), avec lequel le porte-buse (1) est relié de manière articulée, et l'élément de fixation (11) du porte-buse (1), avec lequel le porte-buse (1) est susceptible d'être fixé sur le véhicule (12), le porte-buse (1) est susceptible d'être maintenu sur le phare (3) par une liaison à rainure et à languette (13, 14) qui présente un jeu important transversalement à la direction de translation de la buse (5).

3. Dispositif de fixation selon la revendication 2, caractérisé en ce que la languette (14) est réalisée en forme de crochet et la rainure (13) en forme d'oeillet.

4. Dispositif de fixation selon l'une quelconque des revendications 1 à 3, caractérisé en ce que la liaison articulée entre l'élément de fixation (10) du phare (3) et le porte-buse (1) est formée par un pièce de liaison cylindrique rigide (16) et une pièce de liaison élastique (17) assemblée avec la pièce de liaison (16) par ajustement serré, la direction d'assemblage s'étendant en direction de translation de la buse (5) et les pièces de liaison (16, 17) étant susceptibles d'être déplacées l'une par rapport à l'autre en direction de translation de la buse (5).

5. Dispositif de fixation selon la revendication 4, caractérisé en ce que la pièce de liaison élastique (17) est un disque annulaire porté par un goujon (18) d'un porte-buse (1) et en ce que la pièce de liaison cylindrique rigide (16) est une douille montée sur le phare (3), dans laquelle le disque est enfiché avec ajustement serré.

6. Dispositif de fixation selon la revendication 5, caractérisé en ce que la douille présente sur sa face intérieure des nervures s étendant en direction de translation de la buse (5), lesquelles sont enfoncées dans le disque élastique.

7. Dispositif de fixation selon l'une quelconque des revendications 4 à 6, caractérisé en ce que la pièce de liaison cylindrique rigide (16) est formée par la surface enveloppe du porte-buse (1) lui-même et en ce que la pièce de liaison élastique (17) est réalisée en forme d'anneau et est enfilée avec ajustement serré sur la surface enveloppe du porte-buse (1).

8. Dispositif de fixation selon la revendication 7, caractérisé en ce que la pièce de liaison annulaire est réalisée en un matériau présentant l'élasticité du caoutchouc et est mise en place dans une ouverture de l'élément de fixation du phare.

9. Dispositif de fixation selon la revendication 7, caractérisé en ce que la pièce de liaison (17) annulaire est réalisée d'une seule pièce avec l'élément de fixation (10), l'ouverture centrale de la pièce de liaison (17) annulaire étant formée par des pattes (10) élastiques orientées radialement vers l'intérieur et séparées chacune par une fente.

10. Dispositif de fixation selon la revendication 9, caractérisé en ce que la pièce de liaison (17) annulaire est réalisée en forme d'entonnoir par les pattes (19).

11. Dispositif de fixation selon l'une quelconque des revendications 1 à 10, caractérisé en ce que par l'élément de fixation (11) du porte-buse (1), on peut réaliser une liaison par enfichage et/ou par vissage (20) avec le véhicule (12).

12. Dispositif de fixation selon la revendication 11, caractérisé en ce que l'élément de fixation (11) du porte-buse (1) présente une langue élastique qui est susceptible d'être fixée sur le véhicule par le vissage (20) et qui maintient la liaison par enfichage dans sa position.
